# EUROPEAN PATENT APPLICATION

(11) **EP 4 199 387 A1**
(43) Date of publication of application: **21.06.2023**
(21) Application number: 21306775.4
(22) Date of filing: 15.12.2021
(51) Int. Cl.: H04J 11/00, H04L 5/14

(54) **UPLINK FREQUENCY AREAS DYNAMIC PROCESSING IN XDD CONTEXT**

(71) Applicant: Telit Cinterion Deutschland GmbH, 81541 München (DE)
(72) Inventor: BREUER, Volker, 16727 BOETZOW (DE); DEMARTY, Joël, 35520 MONTREUIL LE GAST (FR)
(74) Representative: Pearl Cohen Zedek Latzer Baratz UK LLP

(57) **Abstract**

The present invention relates to a method to dynamically process, at a base station, uplink frequency areas in a cross division duplex (XDD) context, said method comprising the steps of:
- receiving information about UL/DL split from another base station having larger downlink frequency area,
- sending in answer information about own UL/DL split,
- determining at least an interference frequency area from the UL/DL split information,
- receiving additional information from the other base station about the downlink content in interference frequency area,
- processing signals received in the interference frequency area taking into account the downlink content provided by the other base station in the interference frequency area.

## Description

### FIELD OF THE INVENTION

The present invention relates to a method to process, at a base station, uplink frequency areas in a cross division duplex (XDD) context.

The invention also pertains to a base station implementing said method.

### BACKGROUND OF THE INVENTION

For 3GPP Release 18, discussions started related to Cross Division Duplex (XDD) for Time Division Duplex (TDD) and, more generally, discussions started related to the evolution of duplex operation for NR, with the example areas of deployment scenarios, including duplex mode and interference management. Thus XDD, simultaneously operating UL and DL on the same TDD carrier but on different frequency, is one of the fields to be further investigated for Release 18.

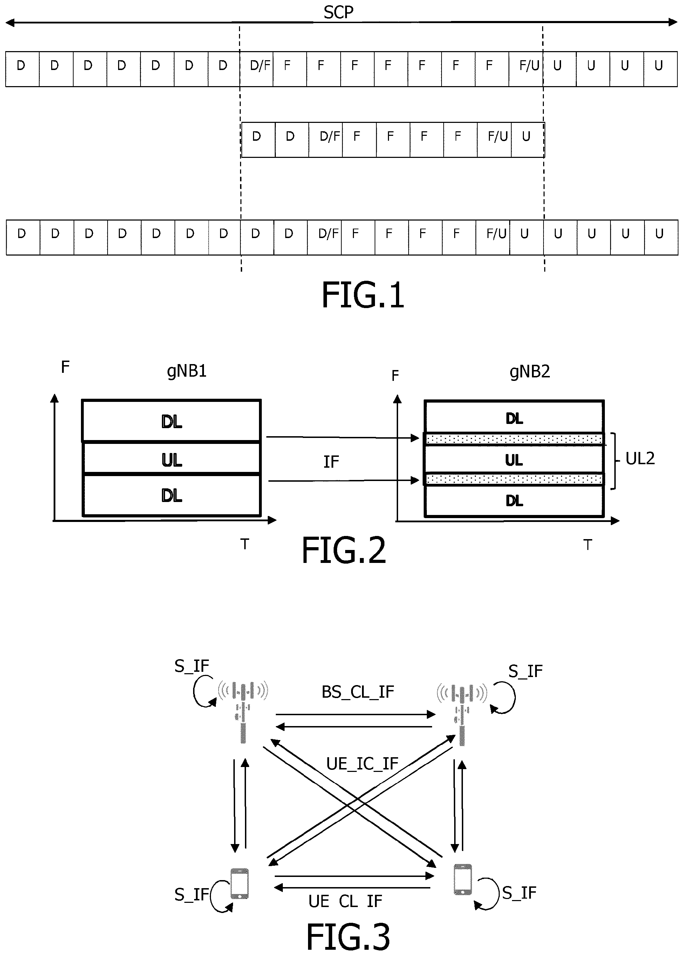

Major New Radio (NR) bands, e.g. all frequencies in 3,5GHz or 6GHz range, are TDD spectrum. It means that uplink (UL) and downlink (DL) happen in the same band and are separated by defining certain slot for UL or DL as depicted in Figure 1.

Figure 1 schematically shows TDD in 5G. It has no more fixed predefined frame formats rather provides certain flexibility to allocate slots within the frame, i.e. a slot configuration period SCP in a certain direction and also allocating symbols within a frame in certain direction. For this purpose, as shown on the first line of figure 1, a cell-specific slot configuration period via tdd-UL-DL-ConfigurationCommon is defined in the standard, flexible slots F intervene in the slot configuration period among uplink slots U and downlink slots D. Intermediate slots D/F and F/U are offered, respectively for downlink and flexible symbols and for flexible and uplink symbols.

The slot configuration period thus defines a DL-UL transmission periodicity including downlink only slots D, uplink only slots U and flexible slots F, D/L and F/U. The second line on figure 1 schematically shows an user equipment (UE) specific slot configuration via tdd-UL-DL-ConfigurationDedicated. Here, four slots among the flexible slots F remain not configured. Two downlink slots D are inserted at the beginning of the flexible slots as defined in tdd-UL-DL-ConfigurationCommon and one uplink slot U is inserted at the end of the flexible slots. The third line shows the resultant of combined cell- and UE-specific configurations.

UE specific information to the slot configuration is necessary to help the network adjust DL/UL pattern based on the UE needs. Due to this adjacent DL or UL regions defined, there is a certain delay for the overall UEs concerning individual HARQ feedback. HARQ feedback needs to have a certain minimum time but may be delayed until timeslot in the right direction occurs. This leads to additional delays for some devices depending on the overall configuration.

Depending on the desired traffic, a configuration providing more DL or UL opportunities can be chosen. However the DL and UL form consecutive areas as UL/DL switching in the UE takes correspondingly time. It however allows to get rid of the duplex filter which in FDD is used to separate UL and DL frequencies.

The table below shows the provided latency calculation.

| **Step** | **Parameter** | **LTE Release 10** | **NR-FDD** | **NR-FDD** | **LTE Release 10** | **NR-TDD** | **NR-TDD** |
|---|---|---|---|---|---|---|---|
| | | | Case #1 | Case #2 | | Case #1 | Case #2 |
| 1 | Subcarrier Spacing | 15 kHz | 15 kHz | 60 kHz | 15 kHz | 15 kHz | 60 kHz |
| 2 | OFDM symbols per TTI | 14 | 2 | 2 | 14 | 7 | 4 |
| 3 | DL/UL configuration | NA | NA | NA | LTE Conf. #6 | LTE Conf. #6 | S-U repeated |
| 4 | Processing Delay | | | | | | |
| | 4.1 Transmitter processing delay | 1 ms | 0.143 ms | 0.0357 ms | 1 ms | 0.5 ms | 0.0714 ms |
| | | 0.5 ms | 0.071 ms | 0.0179 ms | 1.4 ms (DL) | 1.325 ms (DL) | 0.0714 ms |
| | 4.2 Frame alignment time | | | | 1.4 ms (UL) | 1.025 ms (UL) | |
| | 4.3 Transmission Time (= TTI) | 1 ms | 0.143 ms | 0.0357 ms | 1 ms | 0.5 ms | 0.0714 ms |
| | 4.4 Receiver processing delay | 1.5 ms | 0.214 ms | 0.0536 ms | 1.5 ms | 0.75 ms | 0.1071 ms |
| 5 | **One Way Latency 4,1 + 4.2 + 4.3 + 4.4** | 4 ms | 0.571 ms | 0.1429 ms | 4.9 ms (DL) 4.9 ms (UL) | 3.075 ms (DL) 2.775 ms (UL) | 0.3124 ms |
| 6 | **HARQ RTT (round-trip time)** | 8 ms (n + 4 NACK, n + 4 Re-Tx) | 1.142 ms (n + 4NACK, n + 4 Re-Tx) | 0.2143 ms (n + 3NACK, n + 3 Re-Tx) | 11.2 ms (DL) 11.5 ms (UL) | 4.65 ms (DL) 4.825 ms (UL) | 0.4286 ms |
| **User plane latency with 10 % HARQ BLER 10** % (one way latency) + 0.1 × (HARQ RTT) | | 4.8 ms | 0.685 ms | 0.1643 ms | 6.02 ms (DL) 6.05 ms (UL) | 3.54 ms (DL) 3.2575 ms (UL) | 0.355 ms |

It shows that TDD latency is longer than comparable FDD latency. Thus subframe/slot switching increase the overhead and, giving that many 5G bands are TDD, means unpaired frequency bands, this is a general drawback which would be overcome if UL and DL would exist in parallel.

Thus the biggest drawback when looking at the TDD spectrum is the delay caused by the subsequent UL/DL usage change. So an RTT-loop DL-assignment/UL-sending/DL-acknowledgement takes correspondingly time, and becomes even longer when considering that also HARQ retransmissions may be needed. As a consequence, XDD-evolution is intended in Release 18.

Figure 2 shows XDD in TDD frequency band with frequency F depending on time T. According to XDD, as shown on figure 2A, any base station, here gNB1, transmits in outer ranges of its frequency bands while an uplink UL is done in a centered inner range. As illustrated on figure 2B, in case a different gNB2 has different DL/UL ratios configured intra-MNO, crosslink interferences IF occurs between the two nodes on both sides of the uplink centered inner range.

So XDD, or full-duplex in TDD band, as depicted in figure 2, would allow equal calculations regarding delay and results as in FDD because XDD is full-duplex based on frequency band chunks, i.e. frequency division duplex within the band. This definitely bears challenges for the UE to realize flexible filtering or avoid self-interference.

XDD as depicted in Figure 2, especially as Subband Full-duplex option (SBFD), divides the single frequency band in an inner UL and two outer DL bands, which leads to the use of certain frequency chunks different in direction at the same time.

Such a solution significantly reduces the latency also in TDD bands. However, as evoked above, it also brings new challenges and rules for assignment of the XDD usage and interference scenarios. Especially the area where adjacent base stations could operate on the same frequency chunk in different directions leads to base-station to base-station interference. Typically one base station is transmitting at high power to its served UEs in a direction whether the other base station is trying to receive at minimum sensitivity in said frequency chunks signals from its UEs and hence leads to the above-mentioned base-station to base station interference. The receiving base station experiences in said range also the emissions of the neighbor base stations as interference for the wanted UE signals.

This invention especially deals with interference scenarios arising at the base station for the case that different gNBs use the available spectrum differently. Operators already pointed to the fact that the UL/DL sharing between different gNodeBs should be supported to be different as they may have different traffic needs and to allow for flexibility. Some devices will do more DL, for example software, transmission of films data, while other devices are UL centric, for example video surveillance. Other devices may rather have equal demands on DL and UL, for example real-time gaming. In 3GPP for Release 18 Subband Full-duplex option (SBFD) for TDD bands is thus considered. Operators expressed the clear intention to have individual UL/DL split in each base station which leads to the interference scenarios including BS cross link interference.

As a consequence, it should be possible to configure the frequency chunks being used for UL and DL differently for neighboring base stations, and having a certain flexibility in changing said assignment on a longer time base. However, when supporting different traffic directions in different base stations in different directions, this leads to the field of interference.

Figure 3 shows the possible interference scenarios when XDD is deployed, meaning that UL and DL data are present at the same time in a frequency band while the DL and UL regions are not synchronized, i.e. these regions are not of the same size between all neighbor cells. Figure 3 thus illustrates a new effect of cross-link interference mainly that appears compared to synchronized one way TDD.

Typically, one base station tries to receive at minimum sensitivity in a certain frequency area while another base-station being a few kilometers away transmits at maximum power on the same frequency chunks. In many such conditions, the base stations will be in loss of signal, meaning that the second base station signal arrives with a significant power at the other receiving base station and hence there is the interference situation for the receiving base station.

Thus a base station supporting larger RX area (UL) will face corresponding interference at the UL sides, used by the neighbor cell as DL. It means that in this area the neighbor cell DL is received in conjunction with the desired UE UL traffic.

This invention especially focuses on the cross-link interference between the base stations. As depicted in figure 3 and outlined in the technical background there are several interference scenarios occurring when XDD or especially SDFB is deployed. However, in addition to self-interference S_IF and to UE crosslink interferences UE_CL_IF, the above described inter-base station interference scenario BS_CL_IF appears newly due to base station cross-link interference occurring when a base station transmits in frequency area (DL) which is already used by another base station as receiving area (UL). Also, due to appearing downlink/downlink and uplink/uplink UE intercell interferences UE_IC_IF illustrated by the crossing arrows on figure 3, the reception of the UL, i.e. the UE reception, is disturbed by the DL transmission of the neighbor base station. This effect is known and can be handled as long as the received wanted base station signal is significantly higher than the unwanted received base station signal of the neighbor cell. The invention is however intended but not restricted to inter-gNB interference mitigation. It also concerns base station and UE interference.

According to the prior art, such interferences can be prevented by doing synchronized SXDD for avoiding such interference scenarios. Another solution would be to act with less power in the respective frequency chunks. It could be alternative solutions but they have clear efficiency drawback as all base stations would have to apply a same UL/DL split, irrespective of the individual traffic needs in said cell. Also the impacted frequency chunks would be limited in their usage to avoid interference to neighbors. Those frequency chunks would then be used only in a certain direction or with less power to minimize interference.

In parallel, UE cross-cell interference is so far known and solved by the UE doing neighbor cell measurements and, having the knowledge of neighbor SS-blocks, especially PSS and SSS sequence, the UE is hence able to subtract said SS blocks signals from its receiving sequence. This method is UE centric and solves interferences only on the UE side, such receivers are called interference cancelation receivers. It means that, receiving information on neighbor cells while doing neighbor cell measurements, they hence subtract those to achieve a better signal to noise ratio while receiving their wanted signal.

Further alternative and advantageous solutions would, accordingly, be desirable in the art.

### SUMMARY OF THE INVENTION

The present invention aims at mitigate base station cross interference. It is here noted that network assisted base station cross interference was so far never an issue addressed and hence no further methods than synchronization were deployed as related solution.

The present invention is defined, in its broadest sense, as a method to dynamically process, at a base station, uplink frequency areas in a cross division duplex (XDD) context, said method comprising the steps of:
- receiving information about UL/DL split from another base station having larger downlink frequency area,
- sending in answer information about own UL/DL split,
- determining at least an interference frequency area from the UL/DL split information,
- receiving additional information from the other base station about the downlink content in interference frequency area,
- processing signals received in the interference frequency area taking into account the downlink content provided by the other base station in the interference frequency area.

The invention thus provides signalling between cellular entities related to signal in downlink that can be subtracted. The base station which causes accordingly cross link interference provides additional information on the usage/content of said frequency chunk which will cause the interference. Contrarily to any interference correction known in the prior art, the base station does not perform measurements but only subtract content according to the additional information as provided by the other base station. The base stations not only exchange information on their applied UL/DL ratio but also information on cell specific signals that are used in the interference frequency area.

Additional information on content of the interference frequency area enables the base station to know the content sent by the other base station in the interference frequency area and not to consider it among received signal. Typically a mathematical signal cancellation can then be performed. With the invention is provided additional information on the usage/content of said frequency chunk which will cause the interference which enables such a cancellation. The interfered base station can perform XDD interference suppression. The information exchange enables to eliminate BS crosslink interference.

Advantageously, the additional information on content of the interference frequency area enabling the base station to know the content sent by the other base station in the interference frequency area, the step of processing signals received in the interference frequency area comprises subtracting such content in the interference frequency area.

This is advantageous for the base station to simply subtract a content in the interference frequency area, content that it knows or has means to know it.

In an embodiment, said content sent by the neighboring base station in the interference frequency area includes repetitive constant signals.

This is advantageous as it places cell specific information that does not change, which is preferable to simplify the cancellation of the interfering signals in the interference frequency area. Advantageously such information are not individually ciphered for privacy and security reasons but refer to cell specific information. Hence the information stays constant over time and only needs to be provided once.

Advantageously, the additional information includes, at least once, the repetitive constant signals in order for the base station to be able to subtract it from the received signals in the interference frequency area.

This content is here directly provided in the additional information.

The nature of the content can also be designated in the additional information as far as the base station already received this content once and can retrieve it or as far as the base station knows this content.

It is thus particularly adapted to signals and information which can be provided once to the neighbour cell or that are known also by to the neighbour cell. It is then accordingly subtracted from the received signal to eliminate the BS-cross interference and only the UE signal from its own UE sending in UL remains.

Advantageously, the repetitive constant signals are common between the two base stations

This can typically be synchronization signals, a part of them being also common for all base stations and thus easy to subtract by the base station. The SS-blocks are indeed the simplest and most straightforward content that can be introduced in the interference frequency signal.

Thus, according to an embodiment, repetitive constant signals are chosen among the followings:
- SS-block, including PSS, SSS and PBCH,
- BCH/broadcast information,
- System information.

The invention is thus typically based on exchanging information on System Information provided via neighbour cells and related update information when needed, thus enabling coordination for deployment of those information in a specific interference frequency area.

In further embodiment, said content of the interference frequency area includes temporary signals.

In such embodiment, it is useful that the base station received at least once the temporary signals in the additional information exchanged according to the invention.

Typically, temporary signals are on demand system information.

The interference frequency area is thus used preferably by the base station having the largest downlink frequency area to transmit on demand system information to the UE.

Advantageously, additional information includes respective signaling when on demand system information is activated or deactivated or MBMS broadcast.

This enables to provide information about the occurrence of temporary signals or about their changes.

The invention allows flexibility compared to a static approach and also avoids the usage of such overlapping bands with reduced power and hence reduced efficiency. The base station is informed on cell specific signals that can be cancelled in the signals received in the interference frequency area.

This method allows to eliminate the cross-BS interference to a large extend without causing heavy signaling flow on the N2 interface, i.e. the interface between base stations as defined within 3GPP between the base stations. Said information exchange may be performed in special standardized containers for intra-base station interference synchronization and notification. Said information exchange may also be performed or enhanced by proprietary signaling which is also of importance in case the base stations are from the same vendor, i.e. having enhanced means for intra-vendor interference avoidance between base stations.

According to an embodiment, information about UL/DL split from another base station having larger downlink frequency area comprises an indication that the uplink frequency area is deviated and indication on the side on which it is deviated.

The information exchange is related to a certain pre-configuration indicating area/side in what direction UL/DL from the pre-configuration is deviated.

Advantageously, an uplink border, being a UL/DL switching frequency, is provided in addition to the information about UL/DL split.

With this information, the base stations can co-ordinate at least one border to match and localize the interference. The base station that implements the method of the invention is thus aware in which area UL, respectively areas DL, is used.

According to an advantageous embodiment, a general uplink border, being a UL/DL switching frequency, is signaled by a network entity for all involved base stations to apply same frequency for UL/DL switching for all base stations operating on said frequency.

Thus the present invention in addition considers the alignment of at least one frequency border where UL/DL switching is done, as it is beneficial to focus the interference affected frequencies to one frequency area only. Said alignment is advantageously done by a network entity providing said one switching border to all base stations for localizing the interference in one frequency area. And hence all above information exchange can be referred to said area. It also eases the exchange and update of information in case that the UL/DL allocation of a base station changes. Indeed, with this embodiment, for all base station directly, only one frequency region would be affected. It is clearly advantageous compared to a scenario where the UL is centered in the inner frequency range and where two lateral frequency areas would experience new interference situations compared to the one fixed side UL/DL switching approach.

According to another advantageous embodiment, a maximum allowed UL/DL ratio, in which the base station can decide on the UL or DL allocation of frequency resources, is signaled by a network entity.

In accordance to the alignment of the first UL/DL switching border, also the maximum allowed UL/DL ratio or the frequency bandwidth which is allowed to be used for either UL or DL is advantageously signaled by a network entity to the base station. This has the advantage that not only one of the boarders is aligned but also that a base station can evaluate which could be the maximum affected region for base station interference. Hence, it can take first preventive measures on avoiding being impacted by cross-base station interference. Even with boarders not synchronized still would be of value, because you known what you can allocate, and also what others could allocate in opposite direction, hence what is the critical area/areas.

Advantageously the method further comprises a step of receiving at a medium access control of the base station, the respective information on UL/DL synchronized switching frequency and the respective maximum allowed UL/DL ratio which can be used for UL or DL, also by other base stations, and a step, for the medium access control, of performing resources allocation avoiding said frequency area for delay critical and high QoS sessions.

It means that the information on centralized UL/DL switching point and maximum allowed UL/DL ratio or frequency area for allocation in either direction, and thus an amount of spectrum which can be used for UL or DL also by other base stations is made aware to the base station medium access control and the medium access control (MAC) performs resource allocation in accordance.

This can thus be done without receiving any information from its neighbor cells, as the base station can evaluate the maximum impacted frequency area. In that frequency area it can place especially non-critical communication to avoid any impacts on delay critical information exchange with user equipments. This can result in placing the UL of delay critical communication in other frequency areas than the frequency area which may be used for DL by surrounding base stations. Hence regardless of the neighbor cell autonomous UL/DL allocation, base station cross interference can only occur in said frequency area which is either allowed for UL or DL depending on the base station traffic needs. Any further coordination for this area is independent of the benefit of knowing which may be the base station cross interference affected frequency range and has a value of its own.

In addition based on this information a base station vendor could add internal means between the base station for interference minimization or mitigation. Indeed vendors may not have specified what they need to do but rather only what is the impacted area and the invention is advantageous in such a situation.

At least it would be possible to schedule delay critical or delay sensitive application with respective 5G QoS outside of this potential base station cross interference region and to allocate this region preferably for less-delay critical services such as background downloads or best effort services. It means that availability of such information is especially suitable for the medium access control (MAC) to consider such information for scheduling purposes.

The present invention also relates to a base station adapted to dynamically process uplink frequency areas in a cross division duplex (XDD) context according to the method of one of preceding claims, said base station comprising:
- transmission/reception module to exchange information about UL/DL split and additional information about downlink content in relation with interference frequency area
- processing module to determine at least an interference frequency area from the UL/DL split information and to process signals received in the interference frequency area taking into account the downlink content provided by another base station in the interference frequency area.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically illustrates the functioning of a Time Division Duplex TDD in 5G;
- Figures 2A and 2B schematically shows an XDD in TDD frequency band for two base stations having different DL/UL ratios ;
- Figure 3 schematically shows the interferences occurring in a XDD context where base stations have different DL/UL ratios ;
- Figure 4 shows a time diagram of a method of the invention; and
- Figure 5 shows an XDD scheme as obtained while implementing a method according to the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

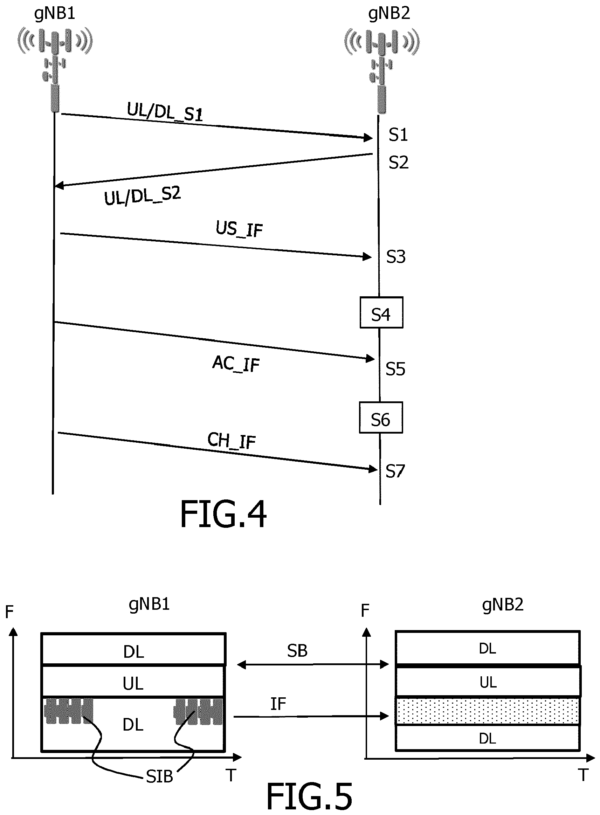

Figure 4 is a time diagram of the method of the invention. In a first step S1, a base station gNB2 receives a message MS1 with indication about the used downlink/uplink split UL/DL_S1 from a neighboring base stations, here gNB1. The base station gNB2 then sends itself, in a step S2, a message MS2 to at least the sending base station gNB1 also indicating used downlink/uplink split UL/DL_S2.

This exchange of information between base stations enables them to know used UL/DL split and where the deviation occurs from pre-configuration. Such a pre-configuration is shown on figure 2, where uplink UL is centered in the frequency area between two frequency chunks dedicated to downlink DL. The interferer and the frequency area affected by cross-link interference affected by the deviation are thus clarified. Frequency area/chunk where downlink of gNB1 interfers uplink reception in gNB2 is now known by both base stations after this first phase of exchange of information of the invention.

The base station gNB1 has then the possibility to send information on usage of impacted area US_IF. Thus, the base station gNB2 receives such an information in a step S3. According to a preferred embodiment of the invention, this information includes SS-block and SIBs periodicity and timing.

More generally, it is advantageous that information on usage of impacted area US_IF includes signals and information, which can be provided once to the neighbor cell or are known also by to the neighbor cell. This is then simple to accordingly subtract them from the received signal to eliminate the BS-cross interference. Then only the UE signal from its own UE sending in UL remains.

It means that said signals are transferred once to the neighbor base station including respective used RNTI and later on only related maintenance information is transferred. One a priori known signal is the PSS, means the primary synchronization sequence, which is identical for all base station. For other a priori known signals such as SSS or area SIBs only respective coding/X-RNTI and maintenance information needs to be provided.

The a priori knowledge can be assumed when both base stations belong to the same area and a certain area specific SIB is provided, hence the content of said SIB is the same and a priori known by all base stations of said area. If the respective used encoding/X-RNTI used for said transmission is also made available for the neighbor base station and information when said information is provided/activated with which periodicity, the base station can eliminate it mathematically in its time and frequency grid to avoid BS cross-interference from said transmissions. In the simplest situation, the base stations are synchronized, i.e. have the same timing and hence only the applied timing needs to be provided to the neighbor cell for elimination otherwise timing difference needs to be evaluated in addition.

Then, in a step S4, the base station gNB2 subtracts signals related to the information provided by the base station gNB1 at appropriate time mathematically from received context. It thus improves UL reception of its user equipments (UE) around. According to this embodiment, the base station gNB2 removes constant interferer signal.

According to an advantageous embodiment, the base station gNB1 also sends Information AC_IF on activation of an area SIB, frequency periodicity and timing, advantageously with a start/stop information. Thus in a step S5, the base station gNB2 receives this activation information AC_IF. The base station gNB2 in then enabled to subtract related signals at appropriate time mathematically from received context. It further improves UL reception of its UEs. This embodiment enables the base station gNB2 to remove momentary interferer signal in a step S6.

Then advantageously, for maintenance, the base station gNB1 also provides information CH_IF on content change or scheduling change of a SIB in the frequency chunk that is concerned by interferences. Thus in a step S7, the base station gNB2 receives this maintenance information CH_IF. The base station gNB2 is then enabled to perform maintenance of the interference processing.

It is here noted that the UL/DL unbalance between the cells may change, however here the change is rather on a longer time basis and related information is also exchanged to adapt the above mentioned mechanism. Also no cross-interference occurs in case all base stations are adopted to same UL/DL ratio.

The figure 5 shows schematically how the base station cross-link interference is concentrated to one frequency area/chunk. According to this preferred embodiment, UL/DL placement of the base stations if feasible will be coordinated in such a way that the difference is only at one side. When multiple base stations are involved also a certain UL/DL raster may be used. It is not necessarily subject for specification but network vendor internal handling. Exchanging the UL/DL usage between the base station on a regular basis also allows base stations causing interference to minimize it by not using this area or using it with less power or sending there common cell specific information.

As illustrated by figure 5, the base station gNB2 with the smaller DL bands i.e. the larger receiving band has received, in addition, information from its neighbour base-station gNB1 which provide downlink in the interference frequency chunk.

This is particularly adapted in case of only moderate deviation, i.e. in the order of 5 or 10 or 20MHz which relates to the SS-block width. The smaller UL is not anymore placed by the base station gNB2 centered in the total frequency area. It rather adapt to one of the UL/DL cross synchronized borders SB of the neighbor cell, i.e. locate the cross-interference region only to one side. This is what is shown on figure 5. It is here noted that the synchronized border SB can also be defined and transmitted by the network itself. It is then advantageously received by a medium access control of any concerned base station to take it into account.

In this case, to achieve the alignment of the interference to one frequency area, one of the corresponding frequency where switching of UL to DL is performed is here a fixed switching frequency SB signaled by one network entity to all base stations. Hence all interference is allocated to one frequency area which is illustrated by a dotted area. So one of the boundaries is fixed signaled by one network entity and hence all base station have this one fixed switching frequency SB.

In its resulting downlink area, the base station gNB1 sends typically system information SIB as shown on figure 5. This is possible as soon as the UL/DL ratio allows sufficient bandwidth for SS-block provisioning in case of smaller UL/DL deviation between the cells. The base station gNB1 causing the crosslink interference is sending is this area especially the SS-blocks, including PSS, SSS and PBCH (BCH corset 0) in addition there could be other system information provided, i.e. SIB1 or SIBs on demand.

The base station that implement the method of the invention is informed on cell specific signals i.e. SS-blocks and System Information, BCH provisioning of on demand SIB or subset 0 which are provided in the cross-link interference area. Once information provided, only activation or deactivation of the on-demand SIBs or other changes need to be indicated. Signaling constantly the entire signal transmitted in said region is from traffic perspective not a suitable method but information on SIBs, i.e. knowing their content and X-RNTI leads to the situation that only once said information needs to be transferred and only upon changes new content information needs to be provided. When the content remains unchanged only activation and deactivation of SIBs on demand needs to be signaled by the interferer base station to neighboring base stations. Thus, here, gNB 2 knows the timing and additional information of the transmitted SS-block of gNB1 and can eliminate it accordingly in its UL time/frequency grid.

The invention thus allows full flexible usage by the XDD intra-MNO/Intra-frequency overlapping frequency chunks by assigning common cell information preferably to these regions so that the signal can be made known to the neighbor base station once including periodicity and used X-RNTI, i.e. Common Identity. Then it is only needed to provide continuously the information in case when on demand BCH information is activated in said area on which relation to the present SS-blocks, i.e. timing, in said area respectively the subcarriers used.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to dynamically process, at a base station, uplink frequency areas in a cross division duplex (XDD) context, said method comprising the steps of:
- receiving information about UL/DL split from another base station having larger downlink frequency area,
- sending in answer information about own UL/DL split,
- determining at least an interference frequency area from the UL/DL split information,
- receiving additional information from the other base station about the downlink content in interference frequency area,
- processing signals received in the interference frequency area taking into account the downlink content provided by the other base station in the interference frequency area.

2. Method according to claim 1, wherein, additional information on content of the interference frequency area enabling the base station to know the content sent by the other base station in the interference frequency area, the step of processing signals received in the interference frequency area comprises subtracting such content in the interference frequency area.

3. Method according to claim 2, wherein said content of the interference frequency area includes repetitive constant signals.

4. Method according to claim 3, wherein the additional information includes, at least once, the repetitive constant signals in order for the base station to be able to subtract it from the received signals in the interference frequency area.

5. Method according to claim 3, wherein the repetitive constant signals are common between the two base stations.

6. Method according to claim 3, wherein repetitive constant signals are chosen among the followings:
- SS-block, including PSS, SSS and PBCH,
- BCH/broadcast information,
- System information,
- MBMS broadcast.

7. Method according to claim 2, wherein said content of the interference frequency area includes temporary signals.

8. Method according to claim 7, wherein temporary signals are on demand system information.

9. Method according to claim 8, wherein additional information includes respective signalling when on demand system information is activated or deactivated.

10. Method according to one of preceding claims, wherein information about UL/DL split from another base station having larger downlink frequency area comprises an indication that the uplink frequency area is deviated and indication on the side on which it is deviated.

11. Method according to claim 10, wherein an uplink border, being a UL/DL switching frequency, is provided in addition to the information about UL/DL split.

12. Method according to one of preceding claims, where a common frequency, being one of the UL/DL switching frequencies, is signaled by a network entity for all involved base stations to apply same frequency for UL/DL switching for all base stations operating on said frequency.

13. Method according to one of preceding claims, wherein a maximum allowed UL/DL ratio, in which the base station can decide on the UL or DL allocation of frequency resources, is signaled by a network entity.

14. Method according to respectively claim 12 or 13, further comprising a step of receiving at a medium access control of the base station, the respective information on UL/DL synchronized switching frequency and the respective maximum allowed UL/DL ratio which can be used for UL or DL, also by other base stations, and a step, for the medium access control, of performing resources allocation avoiding said frequency area for delay critical and high QoS sessions.

15. Base station adapted to dynamically process uplink frequency areas in a cross division duplex (XDD) context according to the method of one of preceding claims, said base station comprising:
- transmission/reception module to exchange information about UL/DL split and additional information about downlink content in relation with interference frequency area
- processing module to determine at least an interference frequency area from the UL/DL split information and to process signals received in the interference frequency area taking into account the downlink content provided by another base station in the interference frequency area.
